# EUROPEAN PATENT SPECIFICATION

(11) **EP 1 765 088 B1**
(45) Date of publication and mention of the grant of the patent: **23.10.2013**
(21) Application number: 05763266.3
(22) Date of filing: 08.06.2005
(51) Int. Cl.: A23D 7/00

(54) **WATER CONTINUOUS COMPOSITION COMPRISING STOST-RICH FAT**
ZUSAMMENSETZUNG MIT KONTINUIERLICHER WASSERPHASE, DIE FETT MIT HOHEM STOST-GEHALT ENTHÄLT
COMPOSITION À PHASE AQUEUSE CONTINUE COMPRENANT UNE GRAISSE RICHE EN STOST

(30) Priority: 05.07.2004 EP 04076917
(43) Date of publication of application: 28.03.2007
(73) Proprietor: Unilever N.V., 3013 AL Rotterdam (NL); Unilever PLC, London EC4Y 0DY (GB)
(72) Inventor: AVRAMIS, Connie, A. Unilever R & D Vlaardingen,, NL-3133 AT Vlaardingen (NL); FLÖTER, Eckhard Unilever R & D Vlaardingen,, NL-3133 AT Vlaardingen (NL); PERSSON, Helena, K. Unilever Sverige AB,, S-252 29 Helsingborg (SE); STELLEMA, Cornelis, S. Unilever Sverige AB,, S-252 29 Helsingborg (SE)
(74) Representative: Wurfbain, Gilles L.
(86) International application number: PCT/EP2005/006186
(87) International publication number: WO 2006/002739

(56) References cited:
- EP-A- 0 276 517
- EP-A- 0 293 194
- WO-A-02/41698
- WO-A-2005/063033
- BE-A- 904 628
- GB-A- 1 431 781
- US-A- 5 472 727
- US-A1- 2004 126 475
- US-B1- 6 217 874

## Description

The present invention deals with an edible oil in water emulsion containing a natural fat phase and a process for its preparation.

### BACKGROUND AND PRIOR ART

Water continuous edible emulsions such as creams, crème fraiche, ice cream, whipping cream, cooking cream, fresh cheese, acidified spreads such as those disclosed in EP-A-841856 are well known in the art. These products generally contain at least some fat to contribute to mouthfeel and consistency of the emulsion. Traditionally these products are derived from fresh cream and hence contain considerable amounts of dairy fat. The traditional high fat content and the dairy fat make them less suitable for use in a low caloric diet, which contributes to a healthy style of living.

US-B-6,497,914 describes the difficulties encountered in the production of whipping cream using vegetable fats and oils instead of dairy fat. Vegetable oils are generally known to have a healthy connotation e.g. because of their relatively high unsaturated fatty acid content. It is disclosed that stable products can only be obtained either by the use of a great amount of emulsifier or by use of a lauric fat ingredient in combination with fat ingredients which are rich in SUS-type triglycerides wherein S represents saturated fatty acids and U unsaturated fatty acids, examples of these are palm oil, illipe butter, shea butter.

The specific fat compositions disclosed play a role in providing structure to the emulsions.

Disadvantages of compositions high in laurics are the following.

For application where a relatively high solids level at ambient temperatures is desired, it is necessary that the lauric fat has been subjected to the process of hydrogenation. Further the presence of lauric acid residues is not acceptable in food preparations wherein food ingredients such as potatoes or herbs introduce hydrolysing enzymes, because hydrolysis results into the development of a prohibitive soapy off taste. Additionally, the presence of the lauric acid residues in food compositions may negatively influence the blood cholesterol level and thus possibly adversely affects cardiovascular health.

Therefore there is a need for structuring fats suitable for use in oil in water emulsions which fats are low in laurics content and preferably are entirely free of laurics.

Fat continuous emulsion compositions such as margarine are known to contain structuring fats to provide firmness to the fat phase of these products. In such products usually fat blends are used which comprise a solid fat and a liquid fat component.

The solid fat, denoted as hardstock fat, serves to structure the fat phase and helps to stabilize the emulsion. For imparting to common margarine a semi-solid, plastic, spreadable consistency the stabilizing and structuring functionality of the hardstock fat plays an important role.

The prior art discloses that hardstock fats for fat continuous products preferably are composed of fats that have been subjected to a modification treatment, for example interesterified mixtures of fats containing residues of a) lauric acid and b) saturated fatty acids with a chain length of at least 16 carbon atoms, as described in patent applications EP-A-089082, US-A-4486475, EP-A-151450, EP-A-170431 and EP-A-41303. Furthermore the presence of triacylglycerides typically referred to as H3 or S3, which indicates triacylglycerides of three saturated fatty acids each with a chain length of at least 16 carbons, is typical for structuring fats.

US-A-5 472 727 discloses an oil in water emulsion comprising 5-40% oil phase, wherein the oil phase comprises a hardstock fat which has a shea stearin content contributing to a StOSt content greater than 20%. Shea stearin is a fractionated (i.e. modified) structuring fat not from a natural source.

WO02/41698 provides for water in oil emulsions (i.e. fat continuous) wherein the fat phase comprises a vegetable hardstock fat which contains at least 5 wt% of Allanblackia and/or Pentadesma fat. There is no reference to oil in water spreads.

US2004/0126475 is related to fat compositions having a fat phase which when melted at 70°C and subsequently held at 0°C for 30 minutes and at 5°C for 7 days give fat crystals which are of β form of, a two-chain-length structure. Two groups of fats are used: a first fat containing StEE-triglycerides (St being stearic acid and E being elaidic acid, which is a trans unsaturated fatty acid) and a second fat containing SMS triglycerides (5 being a saturated fatty acid and M being a mono-unsaturated fatty acid). All examples have a high fat content of about 81 wt% and are mostly water in oil emulsions.

We have found that not all these compositions are suited for use in water continuous emulsions, especially for low fat emulsions (40 wt% of fat or less). This is already apparent from US-B-6,497,914.

EP-A-276517 discloses a process for making a butter-like fat continuous water in oil (w/o) emulsion spread. The spread is made from a water continuous oil in water (o/w) cream and a fat continuous water in oil (w/o) emulsion. The fat in the water continuous cream comprises of quick crystallising sharp melting fats, such as hydrogenated lauric fats, which are rich in C12-C14 fatty acids. The disadvantages of high lauric fats are discussed above. Appropriate fats according to EP-A-276517 are palm oil fractions characterised by a triglyceride composition (SSS: 1-9 wt%, SOS, 30-75 wt% and SSO 3-12 wt%). As palm oil consist of 40-47 wt% of palmitic acid (C16, P) and 36-44 of oleic acid (C18:1, O) and only minor amounts (3-6 wt%) of stearic acid (C18, St) the SOS triglycerides consist mainly of POP triglycerides. A high amount of POP triglycerides causes undesirable graininess in the emulsion.

Therefore it is an object of the invention to provide a fat composition that is suitable for imparting structure and/or stability to an oil in water emulsion without the need to include lauric acid residues in this composition.

### SUMMARY OF THE INVENTION

We have surprisingly found that specific triglyceride fats are suitable for use as natural, not chemically modified, structuring fats in oil in water emulsions. Those fats do not need any modification after refining. The preferred fats are known under the names Allanblackia fat and Pentadesma fat. They contain a high StOSt content: about 65 wt.% of the triglycerides of Allanblackia fat and about 48 wt.% of the triglycerides of Pentadesma fat is StOSt, where St is a stearic acid residue and O is an oleic acid residue.

The present invention provides an edible oil in water emulsion comprising 5 to 40 wt% of a fat wherein the fat comprises 20 to 100wt % of a structuring fat composition, and wherein the structuring fat composition comprises at least 20 wt% of a StOSt- rich hardstock fat, said StOSt-rich hardstock being selected from the group comprising Allenblackia fat, Pentadesma fat or a combination thereof.

In another aspect the invention relates to an edible oil in water emulsion comprising from 5 to 40 wt% fat, the fat comprising a structuring fat composition, wherein the level of StOSt-triglycerides is at least 15 wt% of the total fat level, wherein St means stearic acid and O is oleic acid.

### DETAILS OF THE INVENTION

For the purpose of the invention, triglycerides comprising at least 20 wt%, preferably at least 30 wt% fatty acids with 12 carbon atoms (C12) on total fatty acid weight, are defined as "laurics". Examples of laurics are coconut oil, palm kernel oil, babassu oil or fractions thereof. Preferred products according to the invention comprise less than 5 wt% lauric fatty acid residues on total fatty acid residues, more preferred they are essentially free of laurics which means the amount of fatty acid with carbon chain of 12 carbon atoms is less than 2 wt% on total fatty acid residues.

In this specification where wt% is used, it means weight percentage on total product unless otherwise is indicated.

The present invention relates to edible oil in water emulsions.

The emulsion comprises from 5 to 40 wt% fat. The fat may be a single fat or a fat blend. Preferred emulsions comprise from 10 to 40 wt% fat, more preferred from 10 to 35 wt% fat.

The fat comprises a structuring fat composition in an amount of 20 to 100 wt% on total fat, preferably 30 to 70 wt% on total fat. The structuring fat composition encompasses all fats, which are not liquid at ambient temperature.

The structuring fat composition is composed of hard stock fats.

In the context of the invention, hardstock fat is defined as a fat which has a solid fat content of more than 2%, preferably more than 10% at a temperature of 20 °C. The method to determine solid fat content is described in AOCS official method Cd 16b-93 (direct method, parallel; based on NMR as described in Fette, Seifen, Anstrichmittel 80, (1978), 180-186.

We have surprisingly found that fat compositions wherein the fat comprises 20 to 100wt% of a structuring fat composition, and wherein the structuring fat composition comprises at least 20 wt% of a StOSt- rich hardstock fat are very suitable for imparting structure and stability to an oil in water emulsion. The use of these specific hardstock fats in the hardstock was further found to lead to a better-controlled posthardening in some products after preparation.

A further advantage of these fats is the fact that the stearic acids they supply to the diet are fatty acids which do not affect the cholesterol level and which makes them preferred over dairy fat in contrast to lauric fatty acid residues, which are based on combinations of lauric fats and palmitic fat which are all considered to increase cholesterol level in blood. High cholesterol level is believed to be a risk factor for cardiovascular disease.

StOSt-rich hardstock fats are defined as fat compositions wherein the triglyceride composition is such that the level of StOSt triglycerides is at least 40 wt%, preferably at least 50 wt%, more preferred at least 60 wt% on total triglycerides present.

In a preferred embodiment the amount of StOSt rich hardstock fat is from 30 to 100 wt%, more preferred 40 to 100 wt%, most preferred from 60 to 80 wt% on total weight of the structuring fat composition.

The present trend in food processing is to avoid artificial processing, particularly chemical processing as much as possible and to opt for natural ingredients and natural processing. Natural means that the ingredients have a natural origin and after harvesting have been subjected to no other treatment than a refining or purification treatment and to no modification treatment whatsoever. This trend strongly appeals to present consumer appreciation. It also may contribute to the economy of the production process.

Therefore it is highly preferred that the selected StOSt-rich hardstock fats are natural, which means that they are not obtained in a process that includes fractionation, hydrogenation, esterification or interesterification of the fat. Further, preferably these fats are obtained from non-generically modified sources.

The fats for use as StOSt-rich fats are known under the names Allanblackia fat and Pentadesma fat. They contain a high StOSt content: about 65 wt.% of the triglycerides of Allanblackia fat and about 48 wt.% of the triglycerides of Pentadesma fat is StOSt, where St is a stearic acid residue and O is an oleic acid residue.

Preferably the structuring composition consists essentially of Allanblackia fat or Pentadesma fat or a mixture of both. In this context the term "consists essentially of" means that at least 90%, more preferred at least 95%, most preferred at least 99% of the structuring fat consists of Allanblackia fat or Pentadesma fat or a mixture of both. Allanblackia fat is the most preferred structuring composition.

Allanblackia fat is denoted with a variety of indigenous names including Sonkyi fat. It is harvested from the African plant Allanblackia of which several species such as A. *floribunda* and A. *stuhlmannii* are known. Allanblackia belongs to the subfamily *Clusioideae,* which is part of the family *Guttiferae.* All species share a substantially common fatty acids pattern and triglyceride composition. Allanblackia fat has found some early employment as an ingredient in chocolate manufacture (EP 321227) and in the soap industry (J.Am.oil Chem.Soc.,62,no.5, 1985, pp.910-911).

Allanblackia fat has a high (60 - 80 wt.%) content of StOSt triglycerides, a low StStSt content and the remainder of the fat mainly consisting of StOO.

Pentadesma fat is also obtained from an African plant, the tree *Pentadesma butyracea.*

With a content of 48 wt.% StOSt also Pentadesma fat can be used without modification as a StOSt-rich hardstock fat.

Optionally the structuring fat composition comprises in addition to the StOSt rich hardstock fat another hardstock fat. Suitable optional hardstock fats are palm oil, palm kernel fat, coconut fat, babassu fat, shea fat and their fractions. These fats may have been subjected to enzymatic rearrangement but it is highly preferred that they have not been subjected to any other modification such as chemical interesterification, wet fractionation and hydrogenation, to preserve their naturalness.

Therefore preferably the additional structuring fat also qualifies as a natural fat, so that the whole emulsions fat phase can qualify as natural.

In another aspect the edible oil in water emulsion comprises from 5 to 40 wt% fat, the fat comprising a structuring fat composition, wherein the level of StOSt-triglycerides, wherein St means stearic acid and O is oleic acid, is at least 15 wt% of the total fat level.

The considerable presence of the StOSt triglycerides was found to lead to the advantages described in more detail above such as their cholesterol-neutral effect, the absence of soapy off taste, especially in presence of an acid and the oxidative stability. Furthermore the StOSt triglycerides show a highly desirable melting behaviour which makes the mouthfeel of products containing them, very pleasant. In addition to that the composition comprising the claimed level of StOSt triglycerides showed good cycle stability at cycling between temperatures of 5 and 25 °C.

Preferably the level of StOSt triglycerides is at least 20 wt% on total fat, more preferred from 25 to 70 wt% on total fat level, even more preferred from 25 to 50 wt% on total fat.

Because of the advantages cited above, the StOSt triglycerides are preferably derived from a natural source, most preferred from Allanblackia or Pentadesma fat or a combination thereof.

In addition to the structuring fat composition, the fat optionally comprises another triglyceride fat. This triglyceride fat is preferably chosen from the group comprising palm oil, olive oil, sunflower oil, soy bean oil, rapeseed oil, safflower, linseed, flaxseed, or a combination thereof. Most preferred the oil is high in polyunsaturated fatty acid level because of the positive effect this may have on cholesterol level in blood. Examples of such oils are sunflower oil, rapeseed oil, linseed oil and safflower oil.

The emulsions may be used as such or may be added as part of a final food product. Thus the final food product may for example be an oil in water in oil emulsion wherein the claimed oil in water emulsion is included.

The oil in water emulsion derives at least part of it's structure and/or functionality and/or nutritional benefits from the specific structuring fat that is used in the fat of the emulsion.

The preferred emulsions are rather firm products which are spoonable or spreadable and characterised by a Stevens hardness value of from 40 to 700 g at a temperature of 5 °C when measured according to the conditions specified in the examples, preferably 100 to 500 g, more preferred 100 to 350 g.

Optionally the emulsion comprises further additives that may contribute to its structure and functionality. These additives are preferably selected from the group comprising emulsifiers, thickeners, acidifiers, proteins.

It will be appreciated that the amount and type of further ingredients may be dependent on the type of final product i.e. for example whipping cream, dairy spread alternatives, cooking cream.

Preferred emulsions have a relatively low emulsifier level. Most preferred the amount of emulsifier is below 0.5 wt%, even more preferred from 0.01 to 0.2 wt%. The emulsifier is preferably selected from the group comprising monoglycerides, diglycerides, lecithin, polyoxysorbitan monostearate (Tween™), citric acid ester, diacetyl tartaric acid ester, lactic acid ester, phosphlipids other than lecitin , or a combination thereof.

Optionally the emulsion comprises a thickener. Especially for acidified products with a spreadable or spoonable consistency, the inclusion of a thickener is preferred. The amount of thickener is preferably from 0.1 to 2 wt%, more preferred from 0.3 to 1 wt%. Preferred thickeners are selected from the group comprising guar gum, xanthan gum, starch, gelatin, locust bean gum, carrageenan, agar or a combination thereof.

Preferred products comprise at least some protein to contribute to structure, especially in acidified products, and to contribute to taste. The preferred source of protein is milk protein or soy protein. The amount of protein is preferably from 0.5 to 10 wt%, more preferred from 1 to 5 wt% protein.

Optionally further ingredients are included in the emulsion. Examples of such ingredients are health benefit agents such as phytosterols, vitamins, minerals; colouring agents, flavouring agents and preservatives.

The invention further relates to a process for preparing the oil in water emulsion, which comprises the step of emulsifying a fat phase with an aqueous phase as described in detail above, and depending on the specific product application of the emulsions according to the invention other processing steps as described in detail in the examples.

### Example

General: determination of Stevens hardness value.
   Apparatus used: Stevens Texture Analyser model LFR
   Probe used: plastic cylinder with diameter of 12.7 mm
   Settings of the Stevens Texture analyser:
   Penetration depth: 10 mm
   Penetration speed: 0.5 mm/sec
   The hardness value is determined in grams/cm².
   The temperature is 5°C.
   Allanblackia floribunda fat was purified under standard, conventional refining conditions.

### Example 1: water continuous spread

An oil in water emulsion according to the invention was prepared using the fat blend of Table 1 for preparing an emulsion according to Table 2.

**TABLE 1**

| **Fat blend** | **wt.%** |
|---|---|
| Sunflower oil | 30 |
| Allanblackia fat | 70 |

### Composition of the emulsion table 2

| **Ingredient** | **Wt % on product** |
|---|---|
| Fat | 22.0 |
| Skimmed milk powder | 6.25 |
| Whey protein concentrate (75% protein) | 1.75 |
| Locust Bean Gum (LBG) | 0.3 |
| Salt | 0.3 |
| Potassium sorbate | 0.1 |
| Acetic acid | 0.8 |
| Demineralised water | Up to 100% |

Water phase and fat phase ingredients except for acids were mixed at about 60 °C. After mixing the composition was pasteurized at 85°C for 10 minutes, and cooled down to 44°C, after which homogenisation at 200 bar took place. To the homogenized composition acid was added, until a pH of about 4.8 was reached. This was followed by heating the mixture to 85 °C. The obtained product was homogenized at 300 bar, and subsequently heated to a temperature of 75°C before filling into containers. The product was cooled down to below 10°C and stored at chill temperature.

The Stevens value hardness of this product was 335 g at 5°C. The resulting product was surprisingly stable. We found that even after repeated cycling between 5 and 25 °C, the firmness value was still around 335 g.

### Example 2: creme fraiche type product

An oil in water emulsion according to the invention was prepared using the fat blend of Table 3 for preparing an emulsion according to Table 4.

**TABLE 3**

| **Fat blend** | **wt.%** |
|---|---|
| Rapeseed oil | 70 |
| Allanblackia fat | 30 |

### Composition of the emulsion table 4

| **Ingredient** | **Wt % on product** |
|---|---|
| Fat | 20.0 |
| Skimmed milk powder | 4.0 |
| Butter milk powder | 4.5 |
| Guar Gum | 0.12 |
| pectin | 0.2 |
| starch | 1.0 |
| culture medium | 0.03 |
| lactic acid | 0.05 |
| Demineralised water | Up to 100% |

Water phase ingredients except for acid and culture were mixed and mixture was heated to about 85 °C, fat was added and the mixture was homogenised at 100 bar and subsequently cooled to 5 °C whereupon culture medium was added. The cream was kept at 20 °C for 24 hours. After fermentation the acid was added, until a pH of about 4.5 was reached. This was followed by adding the guar gum and pectin whereafter the emulsion was pasteurised and filled into containers. The product was cooled down to below 10°C and stored at chill temperature.

The Stevens value hardness of this product was around 40 g at 5°C. The resulting product was surprisingly stable. We found that even after repeated cycling between 5 and 25 °C, the firmness value was still around 40 g.

### Example 3: whipping cream

An oil in water emulsion according to the invention was prepared using the fat blend of Table 5 for preparing an emulsion according to Table 6.

**TABLE 5**

| **Fat blend** | **wt.%** |
|---|---|
| Allanblackia fat | 100 |

### Composition of the emulsion table 6

| **Ingredient** | **Wt % on product** |
|---|---|
| Fat | 18.0 |
| Skimmed milk powder | 2.0 |
| Butter milk powder | 3.25 |
| Thickener (Guar Gum, locust bean gum, Carrageenan) | 0.158 |
| locust bean gum | 0.04 |
| emulsifier (monoglycerides) | 0.165 |
| lactose | 1.5 |
| Demineralised water | Up to 100% |

Water phase and fat phase ingredients mixed and the resulting mixture was heated to about 80 °C, homogenised at 120 bar and sterilised and filled into containers. The product was cooled down to below 10°C and stored at chill temperature.

The resulting whipping cream was whipped with a domestic whipping machine and had a good overrun of 205 % and a stevens value at 5°C of 85 g. After storage for 4 weeks still a good overrun of 216% and a good stevens value at 5 °C of 82 g was obtained.

## Claims

1. Edible oil in water emulsion comprising 5 to 40 wt% of a fat wherein the fat comprises 20 to 100 wt% of a structuring fat composition, **characterised in that** the structuring fat composition comprises at least 20 wt% of a StOSt- rich hardstock fat, wherein St is stearic acid and O is oleic acid, said StOSt-rich hardstock being selected from the group comprising Allanblackia fat, Pentadesma fat or a combination thereof.

2. Edible oil in water emulsion according to claim 1 wherein the structuring fat comprises at least 45 wt% of the StOSt-rich hardstock fat.

3. Edible oil in water emulsion according to claim 1 or 2 wherein the level of structuring fat composition is from 30 to 70 wt% on total fat.

4. Edible oil in water emulsion according to claim 1 wherein the fat is natural.

## Patentansprüche

1. Essbare Öl-in-Wasser-Emulsion, die 5 bis 40 Gew.-% eines Fettes umfasst, wobei das Fett 20 bis 100 Gew.-% einer strukturierenden Fettzusammensetzung umfasst, **dadurch gekennzeichnet, dass** die strukturierende Fettzusammensetzung wenigstens 20 Gew.-% eines StOSt-reichen Hardstock-Fettes umfasst, wobei St Stearinsäure ist und O Ölsäure ist, das StOSt-reiche Hardstock-Fett aus der Gruppe, umfassend Allanblackia-Fett, Pentadesma-Fett oder eine Kombination davon, ausgewählt ist.

2. Essbare Öl-in-Wasser-Emulsion gemäß Anspruch 1, wobei das strukturierende Fett wenigstens 45 Gew.-% des StOSt-reichen Hardstock-Fettes umfasst.

3. Essbare Öl-in-Wasser-Emulsion gemäß Anspruch 1 oder 2, wobei die Konzentration an strukturierender Fettzusammensetzung 30 bis 70 Gew.-%, bezogen auf das gesamte Fett, ist.

4. Essbare Öl-in-Wasser-Emulsion gemäß Anspruch 1, wobei das Fett natürlich ist.

## Revendications

1. Émulsion huile dans l'eau comestible comprenant 5 à 40 % en poids d'une graisse, dans laquelle la graisse contient 20 à 100 % en poids d'une composition de graisse de structuration, **caractérisée en ce que** la composition de graisse de structuration comprend au moins 20 % en poids d'une graisse solide en StOSt, dans laquelle St est l'acide stéarique et O est l'acide oléique, ledit solide riche en StOSt étant sélectionné dans le groupe comprenant la graisse d'Allanblackia, la graisse de Pentadesma ou une combinaison de celles-ci.

2. Émulsion huile dans l'eau comestible selon la revendication 1, dans laquelle la graisse de structuration comprend au moins 45 % en poids de la graisse solide riche en StOSt.

3. Émulsion huile dans l'eau comestible selon la revendication 1 ou 2, dans lequel le taux de composition de graisse de structuration est de 30 à 70 % en poids de la graisse totale.

4. Émulsion huile dans l'eau comestible selon la revendication 1, dans laquelle la graisse est naturelle.
